(19) Europäisches Patentamt
European Patent Office
Office européen des brevets

(11) **EP 1 654 099 B1**

(12) **EUROPEAN PATENT SPECIFICATION**

(45) Date of publication and mention
of the grant of the patent:
**20.01.2010 Bulletin 2010/03**

(51) Int Cl.:
**B27L 1/00** *(2006.01)*  **B65G 25/04** *(2006.01)*

(21) Application number: **04742185.4**

(22) Date of filing: **09.07.2004**

(86) International application number:
**PCT/FI2004/000442**

(87) International publication number:
**WO 2005/016607 (24.02.2005 Gazette 2005/08)**

(54) **METHOD AND APPARATUS FOR TRANSFERRING LOOSE MATERIAL**

VERFAHREN UND VORRICHTUNG ZUM ÜBERTRAGEN VON LOSEM MATERIAL

PROCEDE ET APPAREIL DE TRANSFERT DE MATERIAU EN VRAC

(84) Designated Contracting States:
**AT BE BG CH CY CZ DE DK EE ES FI FR GB GR HU IE IT LI LU MC NL PL PT RO SE SI SK TR**

(30) Priority: **13.08.2003 FI 20031152**

(43) Date of publication of application:
**10.05.2006 Bulletin 2006/19**

(73) Proprietor: **Metso Paper, Inc.**
**00130 Helsinki (FI)**

(72) Inventor: **TOHKALA, Antti**
**FI-28360 Pori (FI)**

(74) Representative: **Haimelin, Jukka Ilmari**
**Oy Jalo Ant-Wuorinen Ab**
**Iso Roobertinkatu 4-6 A**
**00120 Helsinki (FI)**

(56) References cited:
**CA-A1- 2 356 875      US-A1- 2003 226 741**
**US-B1- 6 213 178**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention concerns a method for transferring solid material in pieces or particles, for instance wood trunks, chip of bark in a through-shaped conveyor by exerting to the material to be transferred sequentially abrasive forces in the transfer direction and in the return direction on sub-areas of the through. The friction forces exerted to the material to be transferred from the stationary surfaces of the conveyor are smaller than the abrasive forces acting simultaneously in the transfer direction, but bigger than the abrasive forces acting in the return direction.

The invention further concerns an apparatus for transferring solid material in pieces or particles, such as tree trunks, chip, bark or other loose material, said apparatus comprising a stationary frame and parallel, longitudinal elements movable reciprocating in the transfer direction.

Recently it has been disclosed an apparatus in accordance with patent US 5,063,981 and WO 00/40383 (F183181 and FI109103), which has turned out to be very practical for feeding pulpwood to a barking drum. The device in accordance with US 5,063,981, however, requires a relatively great number of transfer elements. Practically transfer elements from 6 to 8 are needed, whereby the exact control of their movement is essential for the operation. The feeding device in accordance with that invention for feeding pulpwood is equipped with balk-like transfer elements supported on rolls. This has led to a relatively expensive construction comprising lots of components.

The device has later been improved so that the friction force between the transfer elements and the material to be transferred is as constant as possible between the different transfer elements. Due to the optimizing of this friction force exerted to the transfer elements, the number of the transfer elements could be decreased to four or even to three. For this reason the construction costs of the device have been considerably reduced. This kind of a construction is known from WO 00/40383 (FI109103).

Common for the devices described in both of said publications is that the bottom of the conveyor as a whole is formed of movable transfer elements. That means that with a device comprising three and five balks a relatively compact bottom and a conveyor not tipping refuse can be achieved.

The method in accordance with the present invention is characterized in by what has become apparent from the enclosed claim 1.

The transfer apparatus in accordance with the present invention is characterized in by what has become apparent from the enclosed claims 3 and 4.

The present invention and its details will be described in more detail in the following, with reference to the enclosed drawings, wherein

Figure 1      shows a traditional transfer apparatus known in the art;

Figure 2      shows a transfer apparatus of prior art, equipped with three transfer elements;

Figure 3      shows a transfer apparatus of the present invention, equipped with two transfer elements;

Figure 4      shows a transfer apparatus of the present invention, equipped with four transfer elements.

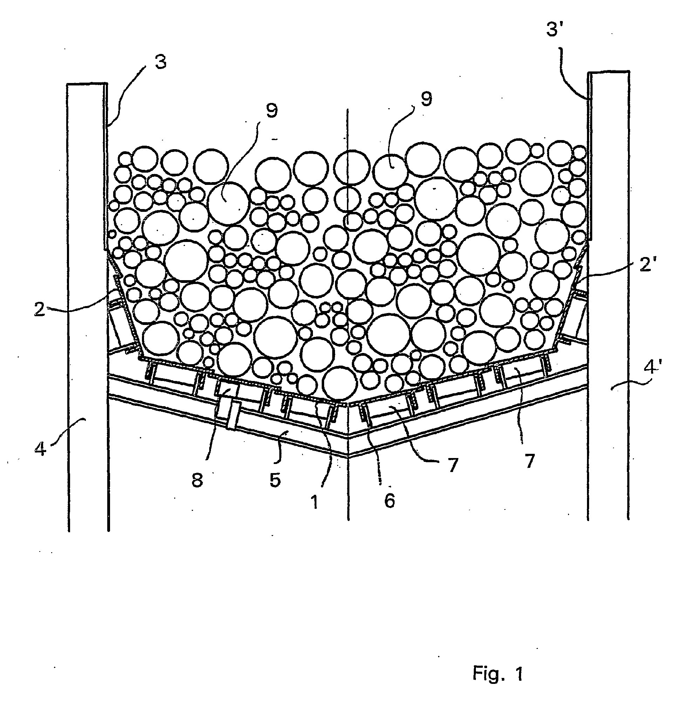

Figure 1 shows a transfer device of prior art in accordance with patents FI 83181 and US 5.063.981, by means of which efficient transfer of pulpwood bundles can be achieved with a troughed form of the transfer bottom consisting of eight transfer elements 1. In a device in accordance with figure 1, the loose mass moves forward with a uniform velocity along with a majority of the bottom balks, and the balks perform a quick return movement one by one. Because the transfer devices in accordance with figure 1 are of uphill type, and the friction of the material to be transferred against the side is disadvantageous, the side-most transfer elements 2 are in a steep angle of about 60° thus increasing the movable side surface and decreasing the side friction.

The bottom of the transfer device consists of 6 equal, balk-like transfer elements 1 having an equal climbing angle. Transfer balks 2 and 2' have been fixed to the sides 3 and 3' of the device. The sides of the device are braced and supported by feet 4 and 4' also supporting the balk 5 having a form of a flat V. Roller supports 6 and rollers 7 are mounted on top of the same. Supporting balks 5 have been arranged at a certain distance from each other in the transfer direction of the apparatus. In the lateral direction the transfer balks 1 are supported by lateral supporting rolls 8. The patent application of the apparatus describes the operation principle of an apparatus in accordance with figure 1 and how the logs 9 are bound by each other during the transport.

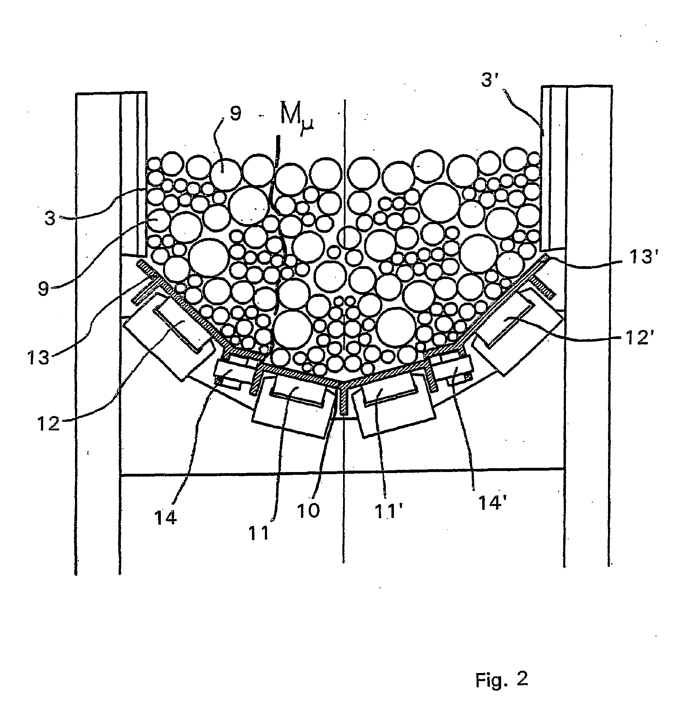

In a more advanced embodiment of WO 00/40383 and an apparatus of figure 2, the number of balk-like transfer elements has been decreased to three. That was achieved by rolling the side balks to a certain angle, which has increased the friction exerted thereto by the material to be transferred. As the operation conditions of the apparatus have been disclosed in detail in said publication, they will not be dealt with in this connection.

The centre transfer balk 10 is supported with two parallel supporting rolls 11 and 11'. The outermost transfer balks 13 and 13' have been supported with rolls 12 and 12'. The side guiding rolls 14 and 14' support the side balks and keep them in place.

The height of the sides 3 and 3' of a transfer apparatus in accordance with figure 2, or the loading height of the material, is chosen so that their common friction force is equal to the single friction force of one transfer balk. In order to guarantee good operation, the apparatus requires an adequate load and gives thereby good transport capacity even with a climbing angle of a couple of degrees.

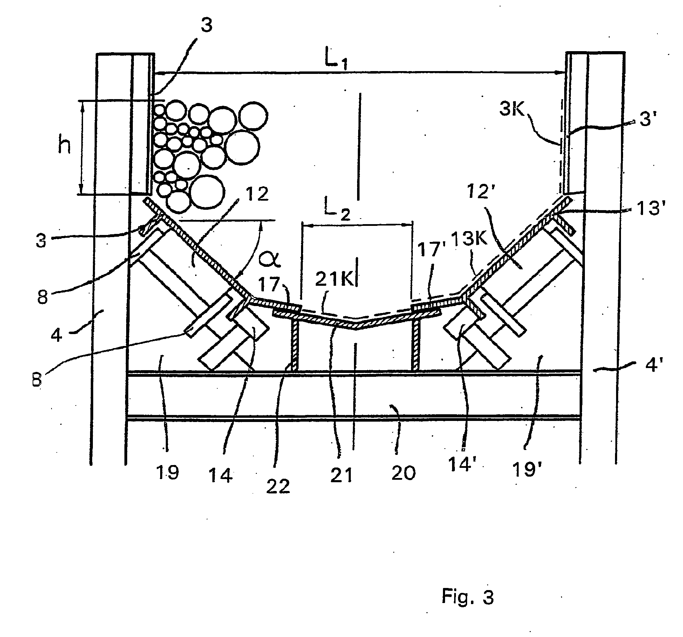

Figure 3 shows a transfer apparatus in accordance with the present invention comprising supporting feet 4 and 4' for supporting the sides 3 and 3'. Between the supporting feet there is provided a balk 20 and bracing corner plates 19 and 19', rolls 12 and 12' being supported from those by brackets 18. Movable transfer balks 13 and 13' are placed on top of the same. These are kept in place in the lateral direction by lateral guiding rolls 14 and 14'. In the centre of the apparatus there is an immovable balk parallel to the transfer direction, being formed of a plate 21 having a form of a flat V and of bracing 22.

The transfer apparatus in accordance with figure 3 operates periodically like the apparatus of figure 2. Thereby the material is transferred sequentially for a certain transfer distance by means of transfer elements, after which the material to be transferred stops and the transfer elements are pulled backwards, one by one. The abrasion force exerted to the material to be transferred (kinetic friction) by the transfer elements moving backwards is not able to pull the load backwards.

In figure 3 the width of the sides of the transfer trough is L1 and the width of the centre balk transporting solid material is L2. Suitable relation of the widths is about 0,20-0,3. The load must differ from the loading of the apparatus of figure 2 in that sense that the friction force formed on the centre balk 21 is smaller than the friction formed against the balks 13, 13'. The surface of the centre balk to be in contact with the solid material is 21K, the surface of the movable side balks is 13K and the surface of the immovable side plate to be in contact with the solid material is 3K. The division of the friction and the exact dimensioning must be contemplated in accordance with patent WO 00/40383.

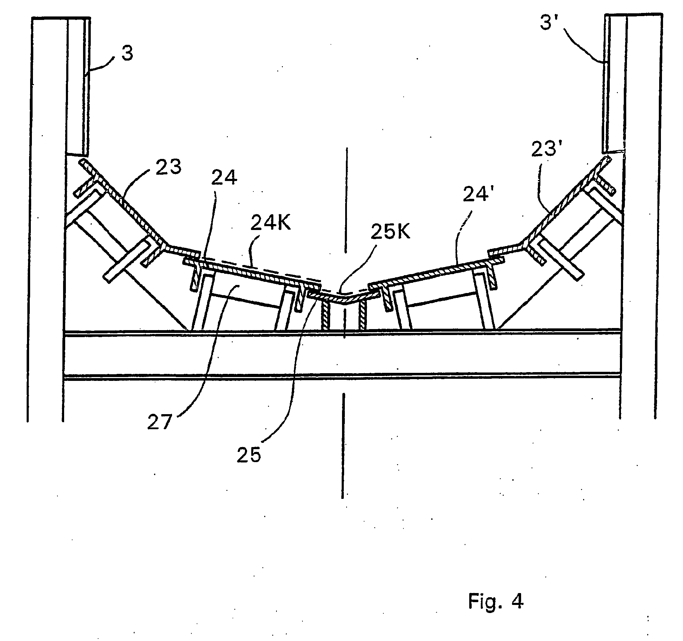

Figure 4 shows simplified also a transfer apparatus in accordance with the present invention, said apparatus comprising sides 3 and 3', four movable bottom balks 23, 23', 24, 24' supported on rolls 27. In the centre portion of the apparatus there is an immovable, relatively narrow centre balk 25 parallel to the transfer direction, collecting loose refuse material. The width of the friction surface 25K of the centre balk is thereby less than a half of the width 24K of the friction surfaces of the balks on the sides. The construction in accordance with figure 4 is suitable for objects where a nearly non-littering bottom and a prominent climbing angle is required. In an apparatus cambered in the transfer direction it is possible to use a narrow centre balk 25 collecting refuse also with a transfer apparatus in accordance with figure 3, comprising two movable transfer balks. An advantage thereby is a prominent transfer effect during the transfer motion.

Transfer device of figure 3 in accordance with the present invention comprised of two transfer balks is suitable for conditions where an uphill conveyor is not needed or where the climbing angle is relatively small. The operation of the device requires that the following two equations are valid:

$$Pe > Pz + Pg$$

$$\tfrac{1}{2}\,Pe < Mu + Pl.$$

The transferring force forward is composed of the friction force of two surfaces 13K = Pe. The abrasion forces counteracting the transfer are the friction Pk of the centre balk 21K and the friction 2P1 of the surfaces of the side plates. The common friction Pz is composed of these, in other words Pk + 2P1 = Pz.

In addition, the gravity of the earth counteracts or promotes the transfer according to the climbing angle of the device. This is described by force Pg (ascending +). The device transfers logs (or other loose material mass), when two balks move forward, when Pe > Pz +Pg.

For pulling backwards the side balks an adequate internal friction of the mass to be transferred is essential, which in general is achieved with an inclination of the side balks of about 45 degrees (and with an adequate loading h against the side-wall 3 (figure 3). This is caused by the width of low-gradient portion 17 of the balks 13 that requires a bigger load height h. By increasing the inclination of the balks 13, a bigger linkage force can be achieved with logs and also with other kind of mass, but this is detrimental for the form of the conveyor.

The boundary friction Mu of a log bundle must be evaluated based on experiments. In figure 2, the area of influence the boundary friction is indicated with a dashed line, and it has been shown in practice with pulpwood, that with a loading level in accordance with figure 2, the boundary friction is adequate and the log bundles travel coherently. The log bundle or the mass to be transferred travels forward when ½ Pe < Mu + P1, because the mass to be transported does not move backward together with the balks 13. With an inclining transfer apparatus, also the effect of the climbing angle must be taken into account.

Observations and experiments have shown, that with an apparatus of the present invention, tree trunks and other loose material can be transported, if the apparatus is loaded correctly and evenly. Applications of that kind are feeding of logs to a debarking drum and de-icing and heating of logs.

A prominent advantage with an embodiment of the transporting apparatus of the present invention is that there are only two movable balks that can also be implemented with slipper brackets. Another prominent advantage is that as there are in that case only two parts to be pulled backwards, the portion of the backward motion time is short and with a transfer apparatus in accordance with the invention, a considerably higher speed can be achieved.

In a conveyor for de-icing, washing or heating, the centre balk will be equipped with apertures of suitable size for drainage. In that case an advantage is that the maintenance problem with rollers in especially wet conditions is solved. As an apparatus of the present invention also a transport apparatus must be considered, in which the side balks have been divided into two separate balks being equipped with their own drives respectively. Thereby the conveyor can be used as a "two-balk" and as a four-balk conveyor with an immovable centre balk. An advantage of this kind of a conveyor is the higher top speed and if problems occur, the load can be transported so that the balks act in the return motion one by one.

Although in this description of the invention the operation of the apparatus has been mainly disclosed in connection with the transport of pulpwood, the rules of the load balancing and of the packing forces are also valid with small adjustments (according to experiments) with other loose material.

**Claims**

1. A method for transferring tree trunks (9) or other loose material by means of a trough-shaped transfer apparatus by exerting abrasive forces and friction forces to the material to be transferred on partial surfaces of the transfer through, the abrasive forces acting sequentially in the transfer direction and in the return direction, and the friction forces acting as braking forces, **characterized in, that** the braking friction forces are exerted on at least three in respect to the transfer direction of the through transversally separate areas, and that the abrasive forces in the transfer direction are exerted to the material to be transferred simultaneously on each areas (13) between the braking friction force areas (3, 3'; 21, 25) , and that the abrasive forces acting in the return direction are exerted non-simultaneously as well with respect to each other as to the abrasive forces in the transfer direction.

2. A method in accordance with claim 1, **characterized in that** the abrasive force in return direction is exerted non-simultaneously on each of said areas sequentially per area.

3. An apparatus for transferring tree trunks (9) or other loose material, comprising a troughed transfer apparatus, **characterized in, that** the centre portion of the bottom of the apparatus comprises a stationary balk (21) parallel with the trough, forming a part of the trough, and between the same and the stationary sides (3 and 3') both sided, a part of the trough is formed by balks (13, 13') movable back and forth in the transfer direction and in the return direction.

4. An apparatus for transferring tree trunks (9) or other loose material, comprising a troughed transfer apparatus, **characterized in, that** the centre portion of the bottom of the apparatus comprises a stationary balk (25) parallel with the trough, forming a part of the trough, and between the same and the stationary sides (3 and 3') both sided there are two transfer balks (23, 24 and 23', 24') forming a part of the trough, movable back and forth in the transfer direction and in the return direction.

5. An apparatus in accordance with claims 3 and 4, **characterized in, that** the width of the friction surface (25K) of the centre, staionary balk (25) is less than a half of the respective friction surface (24K) of the balk (24, 24') adjacent thereto.

**Patentansprüche**

1. Verfahren zum Transportieren von Baumstämmen (9) oder anderem losen Material mittels einer trogförmigen Transfervorrichtung durch Ausüben von Schleif- oder Reibungskräften auf das zu transportierende Material auf Teiloberflächen des Transfertrogs, wobei die Schleifkräfte aufeinanderfolgend in der Transportrichtung und der Gegenrichtung wirken und die Reibungskräfte als Bremskräfte wirken, **dadurch gekennzeichnet, dass** die bremsenden Reibungskräfte auf zumindest drei Bereiche, die in Querrichtung zur Transportrichtung des Trogs getrennt sind, ausgeübt werden und dass die Schleifkräfte in der Transportrichtung auf das zu transportierende Material gleichzeitig auf jeden Bereich (13) zwischen den Brems-Reibungskraft-Bereichen (3, 3'; 21, 25) ausgeübt werden und dass die in der Gegenrichtung wirkenden Schleifkräfte nicht-gleichzeitig ebenso zueinander wie zu den Schleifkräften in der Transportrichtung ausgeübt werden.

2. Verfahren gemäß Anspruch 1, **dadurch gekennzeichnet, dass** die Schleifkraft in der Gegenrichtung nicht-gleichzeitig auf jeden der Bereiche aufeinanderfolgend je Bereich ausgeübt wird.

3. Vorrichtung zum Transportieren von Baumstämmen (9) oder anderem losen Material, mit einer trogartiger Transfervorrichtung, **dadurch gekennzeichnet, dass** der Mittelteil des Bodens der Vorrichtung einen zu dem Trog parallelen und einen Teil des Trogs bildenden stationären Balken (21) aufweist und zwischen diesem und den stationären Seiten (3 und 3') beiderseitig ein Teil des Trogs von Balken (13, 13'), die vor und zurück in der Transportrichtung und der Gegenrichtung bewegbar sind, gebildet ist.

**4.** Vorrichtung zum Transportieren von Baumstämmen (9) oder anderem losen Material, mit einer trogartiger Transfervorrichtung, **dadurch gekennzeichnet, dass** der Mittelteil des Bodens der Vorrichtung einen zu dem Trog parallelen und einen Teil des Trogs bildenden stationären Balken (25) aufweist und zwischen diesem und den stationären Seiten (3 und 3') beiderseitig zwei Transportbalken (23, 24 und 23', 24') bestehen, die Teil des Trogs bilden und vor und zurück in der Transportrichtung und der Gegenrichtung bewegbar sind.

**5.** Vorrichtung gemäß Ansprüchen 3 und 4, **dadurch gekennzeichnet, dass** die Breite der Reibungsfläche (25K) des mittleren stationären Balkens (25) weniger als die Hälfte der jeweiligen Reibungsfläche (24K) des daran angrenzenden Balkens (24, 24') ist.

**Revendications**

**1.** Procédé de transfert de troncs d'arbre (9) ou autre matériau en vrac au moyen d'un dispositif de transfert en forme d'auge en exerçant des efforts d'abrasion et des efforts de frottement sur le matériau à transférer sur des surfaces partielles de l'auge de transfert, les efforts d'abrasion agissant de manière séquentielle dans la direction de transfert et dans la direction de retour, et les efforts de frottement agissant comme des efforts de freinage, **caractérisé en ce que** les efforts de frottement de freinage sont exercés sur au moins trois, par rapport à la direction de transfert de l'auge, zones séparées transversalement, et **en ce que** les efforts d'abrasion dans la direction de transfert sont exercés sur le matériau à transférer de manière simultanée sur chaque zone (13) entre les zones d'effort de frottement de freinage (3, 3' ; 21, 25), et **en ce que** les efforts d'abrasion agissant dans la direction de retour sont exercés de manière non simultanée de même que l'un par rapport l'autre comme pour les efforts d'abrasion dans la direction de transfert.

**2.** Procédé selon la revendication 1, **caractérisé en ce que** l'effort d'abrasion dans la direction de retour est exercé successivement par zone de manière non simultanée sur chacune desdites zones.

**3.** Dispositif de transfert de troncs d'arbre (9) ou autre matériau en vrac, comprenant un dispositif de transfert en forme d'auge, **caractérisé en ce que** la partie centrale du fond du dispositif comprend une poutrelle fixe (21) parallèle à l'auge, formant une partie de l'auge, et entre cette dernière et les côtés fixes (3 et 3') des deux côtés, une partie de l'auge est formée par des poutrelles (13, 13') pouvant se déplacer longitudinalement dans la direction de transfert et dans la direction de retour.

**4.** Dispositif de transfert de troncs d'arbre (9) ou autre matériau en vrac, comprenant un dispositif de transfert en forme d'auge, **caractérisé en ce que**, la partie centrale du fond du dispositif comprend une poutrelle fixe (25) parallèle à l'auge, formant une partie de l'auge, et entre cette dernière et les côtés fixes (3 et 3') des deux côtés, deux poutrelles de transfert (23, 24 et 23', 24') sont agencées, formant une partie de l'auge et pouvant se déplacer longitudinalement dans la direction de transfert et dans la direction de retour.

**5.** Dispositif selon les revendications 3 et 4, **caractérisé en ce que** la largeur de la surface de frottement (25K) de la poutrelle fixe centrale (25) est inférieure à la moitié de la surface de frottement respective (24K) de la poutrelle (24, 24') adjacente à celle-ci.

EP 1 654 099 B1

Fig. 1

6

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5063981 A
- WO 0040383 A
- FI 83181
- FI 109103